# EUROPEAN PATENT APPLICATION

(11) **EP 3 757 479 A1**
(43) Date of publication of application: **30.12.2020**
(21) Application number: 19182742.7
(22) Date of filing: 26.06.2019
(51) Int. Cl.: F24S 25/70

(54) **A CARRYING DEVICE FOR A SOLAR PANEL AND A METHOD FOR REPOSITIONING A SERIES OF CARRYING DEVICES**

(71) Applicant: de Winter, Johannes Adrianus Maria, 8256 RV Biddinghuizen (NL)
(72) Inventor: de Winter, Johannes Adrianus Maria, 8256 RV Biddinghuizen (NL)
(74) Representative: Plaggenborg, Menko Bernard

(57) **Abstract**

The invention relates to a carrying device (1) for carrying a solar panel (4, 5, 6, 7), wherein the carrying device (1) comprises a tray (2) for positioning on a ground surface and a construction (3) for attaching the solar panel (4, 5, 6, 7) thereto. The construction (3) may be attached to the tray (2).

The invention also relates to a set of carrying devices (1), each carrying device (1) comprising linking facilities (13) for mutually linking with an adjacent carrying device (1).

## Description

The present invention relates to a carrying device for a solar panel according to the preamble of claim 1.

It is known in the art to mount solar panels on roofs. To that end, specifically designed frames are used. Also, it is known in the art to group solar panels in so-called solar farms, wherein many solar panels are mounted on constructions with foundation to support solar panels. As a result, solar panels are mounted rigidly with a high degree of certainty that they will not be moved by storms, force of gravity or other causes.

These known constructions provide a disadvantage in that transportation of solar panels requires a complete dismantling of the entire construction.

There is no known solution for this disadvantage in cases where transportation is required.

The invention aims at providing a carrying device that acts as a carrying device when the solar panel is in use and as a transport device when the solar panel is to be transported to change its location.

The invention further aims at providing a carrying device for a solar panel that allows for concurrent transport of both the carrying device and the solar panel.

So as to obtain at least one of the above mentioned aims, the invention provides a carrying device as mentioned in claim 1. This carrying device has the advantage that a single solar panel or a plurality of solar panels can be transported or repositioned easily from one site to another. Since the solar panel (or solar panels) are rigidly mounted on the carrying device and the centre of gravity lies within the circumference of the carrying device it will not fall over easily. However, transport or repositioning of the carrying device together with the solar panel or solar panels can be easily carried out.

It has also shown that the carrying device according to the present invention allows for crop rotation of agricultural land. This means that a particular part of agricultural land is used for a couple of years after which said particular part is not used for agricultural purposes but is left to recover for a year. After that year, said land usually is used for agricultural purposes again. The carrying device according to the present invention can be used advantageously during that year allowing for economic use of that particular part of land. Such synergistic effect is a surprising and advantageous effect.

The invention therefore relates to a carrying device for carrying a solar panel, wherein the carrying device is characterized in that it comprises a tray for positioning on a ground surface and a construction for attaching the solar panel thereto. As a consequence, the carrying device can be transported over the ground, in particular can be towed or dragged over the ground for repositioning the carrying device and the solar panel from one site to another.

So as to ensure that the solar panel and the construction to which it is attached, do not fall over, it is preferred that the construction is attached to the tray.

It is especially preferred for the carrying device according to the invention that the tray has a bottom plane that is substantially equal to the ground surface, the carrying device further having a peripheral edge, such that during use each part of the peripheral edge lies in a plane which is parallel to the bottom plane and which is situated at a higher position than the bottom plane. In such embodiment, the tray may be filled with water, partially or completely, so as to increase its weight and reduce the chance that is falls over.

Since it is preferred that the device has a lowest possible weight when transporting same, the device preferably has a closable drain opening with a removable and replaceable seal, so as to drain any water in the device.

If it is not preferred for the carrying device to contain water, the device's bottom may be provided with at least one opening, preferably a plurality of openings. Any rain water will drain through said at least one opening ensuring that no water will accumulate in the tray.

It is especially preferred for the carrying device according to the invention to be provided with link facilities for mutual linking said carrying device with an adjacent carrying device. By linking mutual devices into a row, the row may be transported in a single operation which eases handling. As a beneficiary effect, the row of mutually linked devices is more stable thus ensuring a proper efficacy of the solar panels.

So as to obtain a row of devices that can be jointly moved easily, it is preferred that the link facilities are provided at at least two opposite sides.

So as to ensure a strong structure, a reinforcement is provided between two oppositely positioned link facilities for transferring a tensile force from a first link facility to the oppositely positioned link facility. Such is preferred for maintaining a sufficient low weight of the tray whereas the reinforcement part only has a sufficient strength to withstand the tensile forces when moving the device, or the row of devices. The tray thus may be made of sheet metal or a plastic material that, as such, has insufficient strength to withstand the tensile forces. The reinforcement may for example be a rigid beam, a chain or a wire, as can be determined or calculated by an engineer.

SO as to be able to carry at least four solar panels of general shape and dimension, it is preferred that the tray has a length of between 3 and 5 meters, preferably between 3.2 and 3.7 meters. For the same reason, it is preferred that the tray has a width of between 2 and 3 meters, preferably between 2.2 and 2.6 meters. A tray with such dimensions can easily carry four solar panels wherein the panels are placed within the peripheral edge of the tray adding to a high stability.

It is furthermore preferred for the carrying device to comprise a peripheral wall with a height of between 0.10 and 0.3 meters, preferably between 0.15 and 0.25 meters. Even when grass and other greenery on the ground has grown to a substantial height after a year, the device still can be moved relatively easily.

Although the carrying device can be made as large as mechanically allowable, it is preferred that the carrying device comprises from 1 to 8 solar panels, preferably 2, 3 or 4 solar panels, since its weight remains relatively limited, allowing for an easy transportation of the devices over the ground.

According to another embodiment, the present invention relates to a set of carrying devices according to the invention, each carrying device comprising linking facilities for mutually linking with an adjacent carrying device. Such set preferably comprises a row of at least five carrying devices, wherein adjacent carrying devices in said row are mutually linked. Such row can be easily transported over the ground by towing a device at an end position. The linking facilities ensure that all devices are moved together with said device at an end position.

It is at least preferred that the set of carrying devices comprises at least two rows of each at least five carrying devices, wherein adjacent carrying devices in a row and adjacent rows are mutually linked. Linking carrying devices in adjacent rows increases its total stability. When moving the carrying devices, each link between adjacent rows is preferably disconnected.

According to another embodiment, the present invention relates to a method for repositioning the carrying device as mentioned above, in particular a set of carrying devices, comprising the step of mutually linking a row of carrying devices and dragging said row from one position to another position. According to the present invention, a complete row of carrying devices, together with solar panels, can be repositioned which saves much time and allows for crop rotation of agricultural land. By applying the method according to the present invention one can easily comply with law prescribing annual crop rotation. Thus, earnings are made with pieces of agricultural land that would otherwise be fallow.

Hereafter, the invention will be further described by means of a drawing. The drawing shows in:
Fig. 1 a schematic perspective view of a carrying device according to the present invention,
Fig. 2 - Fig. 4 a schematic view of a first embodiment of a tray for use in a carrying device according to the invention,
Fig. 5 - Fig. 6 a schematic view of a second embodiment of a tray for use in a carrying device according to the invention, and
Fig. 7 a schematic top view of a set of devices according to the invention.

The same and similar parts and features have been denoted by the same reference numerals in the figures. However, for ease of understanding the figures, not all parts that are required for a practical embodiment have been shown in the figures.

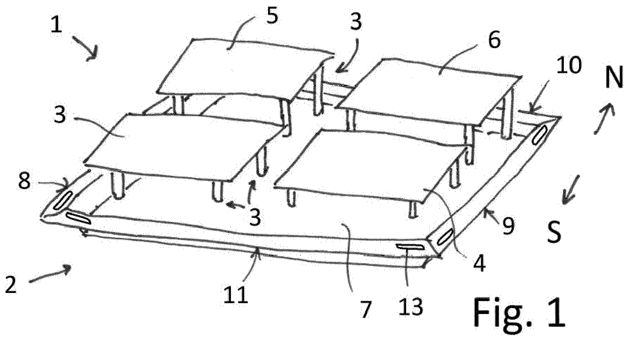

Fig. 1 shows a schematic perspective view of a carrying device 1 according to the present invention. In the embodiment shown, the carrying device 1 comprises a tray 2 with a construction 3 to support solar panels 4, 5, 6, 7. The solar panels are positioned such that an optimum incidence of sunlight is obtained. Solar panels 3, 4 are positioned at a somewhat lower position that solar panels 5, 6 ensuring that solar panels 5, 6 are not located in the shade of panels 3, 4, especially occurring in winter. The letter N denotes a position away from the equator, for example North at the northern hemisphere or South at the southern hemisphere, whereas the letter S denotes a direction towards the equator, for example South at the northern hemisphere or North at the southern hemisphere. Solar panels 3, 4, 5, 6 are tilted upwards towards the direction N.

In the embodiment shown, the construction 3 is comprised of simple stands for carrying the solar panels. Four stands are used for carrying each solar panel. Stands at the S-side are less tall than stands towards the N-side of each solar panel, ensuring a correct tilted position. The construction 3 of a solar panel at the N-side of the device may comprise stands that are taller than any stand near the S-side of the tray, but the invention is not limited to such embodiment.

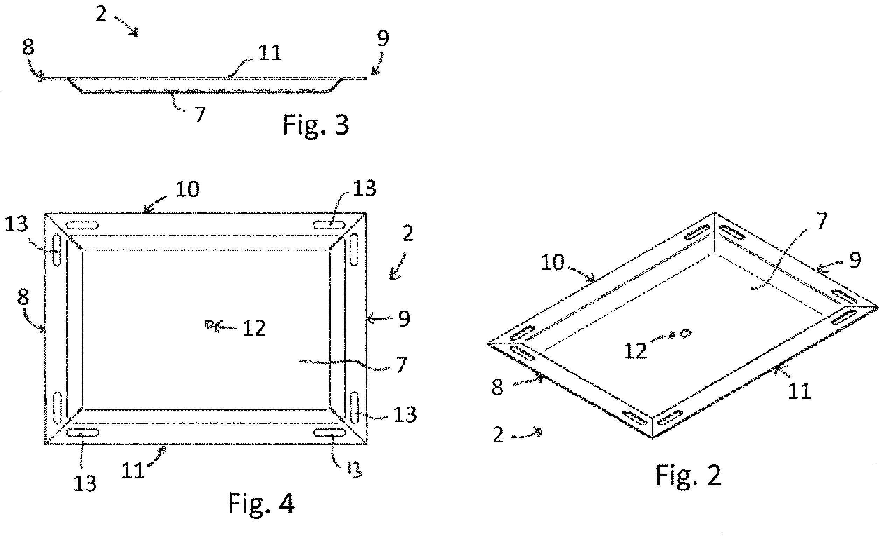

Fig. 2 shows a perspective view of a first embodiment of the tray 2 for use with the device 1 as shown in Fig. 1. The tray 2 has a bottom 7 and side edges 8, 9, 10, 11. Since during use the side edges 8, 9, 10, 11 are positioned at a higher level than the bottom 7, water may be contained in the tray 2 so as to increase its weight and stability to prevent falling over.

In Fig. 3 shows a side view of the tray 2, whereas Fig. 4 shows a top view thereof. The height of the side walls 8, 9, 10, 11 with respect to the bottom 7 is about 15 - 20 cm, allowing for a sufficient weight of water, when the length and width are between 3 - 4 meter and 2 - 3 meter, respectively. A drain 12 is provided in the bottom 7 for removing the water when the tray is to be transported.

Each side wall 8, 9, 10, 11 is provided with link facilities 13. Fig. 2-6 show these link facilities 13 as slotted openings for inserting a coupling element, for example a hook or the like. Said hook forms an end part of a connection that comprises another hook at its other end so as to mutually link two adjacent trays. Optionally, each such connection mat be fixedly attached with one end to one tray whereas it may be detachably coupled to another, adjacent tray.

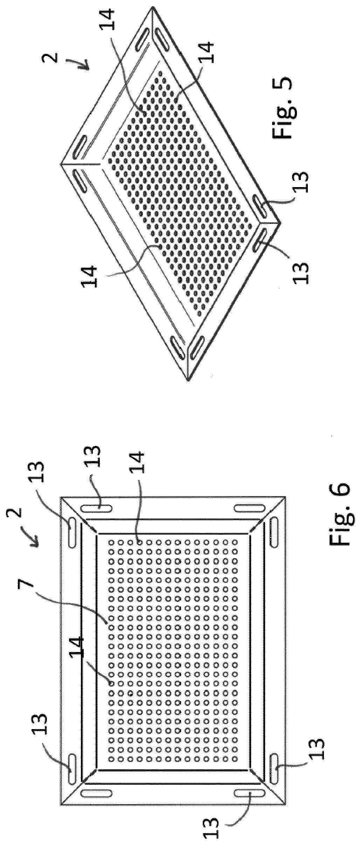

Fig. 5 and Fig. 6 relate to a tray with a plurality of openings 14 in its bottom. These openings 14 are provided for ensuring a continuous drain of water, for example rain water, from the tray 2. As a consequence, grass and the like may grow through these openings ensuring a sufficiently strong fixation with the ground to prevent falling over of the tray with the solar panels. In winter time, when the grass has died it can be easily disrupted when dragging the trays over the ground.

The carrying devices according to the present invention, and as shown especially in Fig. 1, can be implemented in a matrix of carrying devices 1 comprising rows and columns. Trays 2 of carrying devices 1 can be mutually coupled to neighboring trays 2 so as to obtain a rigid matrix that can easily withstand forces of nature, like heavy storms and winds. By uncoupling trays in neighboring rows, each row of devices 1 can be repositioned by towing a tray positioned at an end of such row. When, for example a next year, the matrix should be repositioned in a direction perpendicular to a previous year, trays in neighboring columns can be uncoupled, after which trays in each column can be mutually repositioned.

A special advantage is obtained when rows of devices are positioned close to another neighboring row, or even abutting a row, and wherein after positioning the neighboring rows, neighboring devices are coupled by means of connecting members that have a length that is greater than the mutual distance of the neighboring devices. When repositioning columns of neighboring devices next year, the first device will be repositioned slightly, the next device will be repositioned after the first device is already moving, the third device will be repositioned after the first and second device are already moving, and so on. This provides the advantage that a single device only has to brought into movement instead of all devices together. As a result, even a tractor with a relatively small driving power will be able to reposition a long column of devices. Coupling elements may be chains, ropes, rod-like elements and the like. A coupling element, a rod-like element in particular, may comprise a linear or other type motor for mutually drawing the devices to which it is connected towards each other, both before, during or after the devices are repositioned by a tractor or other pulling vehicle or device. This eases in obtaining the above mentioned advantage of pulling the devices loose, one by one, independent the direction the devices are repositioned, be it in rows or columns. The motors may be powered by the solar panels on the respective device.

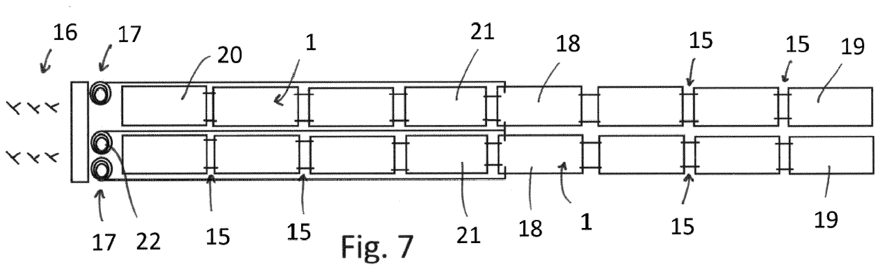

Fig. 7 shows a schematic top view of a set of carrying devices 1 wherein consecutive trays in a row are mutually coupled by coupling elements 15. Hence, when one wants to reposition such row of the set of devices 1, a tractor 16 pulls the first device 1 and as a consequence, all devices in that row are repositioned as well. So as to prevent that all devices 1 have to be pulled loose after they have been sitting on a particular piece of soil for a year or so, it is preferred that only one device, or optionally a limited number of devices in a row, have to be pulled loose together. To that end, two winches 17 are provided which each are connected to a fifth device 18 in the rows as shown in Fig. 7. A winch 22 is provided at a central position between winches 17 and which connects to two devices 18. As a result, by operating the winches, only the fifth 18 to eighth 19 devices are pulled loose. After that, the tractor 16 will be operated so as to pull loose the first 20 to fourth 21 devices and then reposition all eight devices.

Analogously, when the row of devices has been repositioned, the winch can be operated by unwinding part of the winch cable, such that the fifth 18 to eighth 19 devices are left behind the first 20 to fourth 21 devices. By such action, the first 20 to fourth 21 devices are positioned at a relatively larger distance from the fifth 18 to eighth 19 devices, which eases the next year to reposition the devices.

In a series of devices according to the present invention, positioned into a matrix, a central tray 2 may comprise electronics, like converters and a connection with the electricity grid, for converting DC current from each solar cell into AC current and supplying AC power to the electricity grid.

The invention also relates to all combinations of features described here independently of each other.

The invention is not limited to the embodiments as mentioned above and as shown in the drawings. The invention is limited by the claims only.

## Claims

1. A carrying device for carrying a solar panel, **characterized in that** the carrying device comprises a tray for positioning on a ground surface and a construction for attaching the solar panel thereto.

2. A carrying device according to claim 1, wherein the construction is attached to the tray.

3. A carrying device according to claim 1, wherein the tray has a bottom plane that is substantially equal to the ground surface, the carrying device further having a peripheral edge, such that during use each part of the peripheral edge lies in a plane which is parallel to the bottom plane and which is situated at a higher position than the bottom plane.

4. A carrying device according to claim 1, wherein the device has a closable drain opening with a removable and replaceable seal.

5. A carrying device according to claim 1, wherein the carrying device has a bottom that is provided with a plurality of openings.

6. A carrying device according to claim 1, wherein link facilities are provided for mutual linking with an adjacent carrying device.

7. A carrying device according to claim 6, wherein the link facilities are provided at at least two opposite sides.

8. A carrying device according to claim 6 or 7, wherein a reinforcement is provided between two oppositely positioned link facilities for transferring a tensile force from a first link facility to the oppositely positioned link facility.

9. A carrying device according to claim 1, wherein the tray has a length of between 3 and 5 meters, preferably between 3.2 and 3.7

10. A carrying device according to claim 1, wherein the tray has a width of between 2 and 3 meters, preferably between 2.2 and 2.6 meters.

11. A carrying device according to any of the preceding claims, comprising a peripheral wall with a height of between 0.10 and 0.3 meters, preferably between 0.15 and 0.20 meters.

12. A carrying device according to claim 1, comprising from 1 to 8 solar panels, preferably 2, 3 or 4 solar panels.

13. A set of carrying devices according to any of the preceding claims, each carrying device comprising linking facilities for mutually linking with an adjacent carrying device.

14. A set of carrying devices according to claim 13, comprising a row of at least five carrying devices, wherein adjacent carrying devices in said row are mutually linked.

15. A set of carrying devices according to claim 13 or 14, comprising at least two rows of each at least five carrying devices, wherein adjacent carrying devices in a row and adjacent rows are mutually linked.

16. A method for repositioning a set of carrying devices according to any of claims 1-12, comprising the step of mutually linking a row of carrying devices and dragging said row from one position to another position.
